# EUROPEAN PATENT APPLICATION

(11) **EP 4 024 639 A1**
(43) Date of publication of application: **06.07.2022**
(21) Application number: 21217858.6
(22) Date of filing: 27.12.2021
(51) Int. Cl.: H02G 3/06

(54) **PULL-RESISTANT CABLE GLAND**

(30) Priority: 29.12.2020 IT 202000032558
(71) Applicant: Euro 2000 S.p.A., 20083 Gaggiano, Frazione Vigano MI (IT)
(72) Inventor: GUAGLIONE, Angelo, 20088 GUDO VISCONTI MI (IT)
(74) Representative: Modiano, Micaela Nadia

(57) **Abstract**

A pull-resistant cable gland (1), particularly for armored and nonarmored cables, which comprises a cable gland body (2) provided with an external thread, the body being adapted to allow the passage of a cable (20) to be clamped, a conical locking element being arranged at the larger end face of the conical sealing element, and a locking nut being configured to be screwed onto the cable gland body, in so doing abutting against the conical element, for the clamping of the conical element against the sealing element.

## Description

The present invention relates to a pull-resistant cable gland. More specifically, the invention relates to a pull-resistant cable gland particularly for armored and non-armored cables.

As is known, in the sector of cable glands for flameproof applications, the regulations specify a set of tests, including clamping or tightening tests, under determined conditions.

In particular, the regulations require a clamping test which is performed for armored cables and for non-armored cables.

For armored cables a traction force equal to 20 times the diameter of the cable is applied for 1 hour. The slippage allowed on the first tightening or clamping is 2 mm. Furthermore, an aging test is conducted for 1 month and a subsequent clamping test is conducted after the aging, applying a force equal to twenty times the diameter of the cable for six hours. In this case, the slippage allowed on the first clamping is 6 mm.

A similar test is conducted for armored cables.

The fundamental problem with a conventional clamping is the slippage of the cable during testing. There are in fact many problems for makers of cable glands, since the specification of the force to be applied is so high that often the clamping tests are not passed.

For this reason, the current regulations allow the clamping test to be executed on cable glands by applying only 25% of the force that should in reality be applied under the regulations.

This means that a cable gland that passes a test with an applied force that is smaller than the force actually required is not classified as a cable gland like one that would have passed the full test.

In substance, it is up to the user to provide a system for anchoring the cable during the installation phase.

In order to solve the above problem, many companies that make cable glands have had the idea of standardizing a system inside the cable gland itself for fixing the cable, which could enable the cable gland to be tested with 100% of the force specified by the regulations, thus meeting the slippage parameters allowed for the cable.

In a conventional cable gland, the system for fixing the cable locks the cable in place using two screws.

The solution must be optimal for the applications to which the cable gland is subjected.

The aim of the present invention is to provide a pull-resistant cable gland, that makes it possible to pass the clamping test with application of 100% of the specified force.

Within this aim, an object of the present invention is to provide a pull-resistant cable gland for which the installation technician does not need to provide additional systems for anchoring the cable in the cable gland.

Another object of the present invention is to provide a pull-resistant cable gland in which the slippage of the cable inside the cable gland remains within the limits of the regulations.

Another object of the present invention is to provide a pull-resistant cable gland that is highly reliable, easily and practically implemented and low-cost.

This aim and these and other objects which will become more apparent hereinafter are achieved by a pull-resistant cable gland, particularly for armored and non-armored cables, which comprises a cable gland body provided with an external thread, said cable gland body being adapted to allow the passage of a cable to be clamped, a conical locking element being arranged at the larger end face of said conical sealing element, and a locking nut being configured to be screwed onto said cable gland body, in so doing abutting against said conical element, for the clamping of said conical element against said sealing element.

Further characteristics and advantages of the invention will become more apparent from the description of a preferable, but not exclusive, embodiment of the cable gland according to the invention, illustrated by way of non-limiting example in the accompanying drawings wherein:

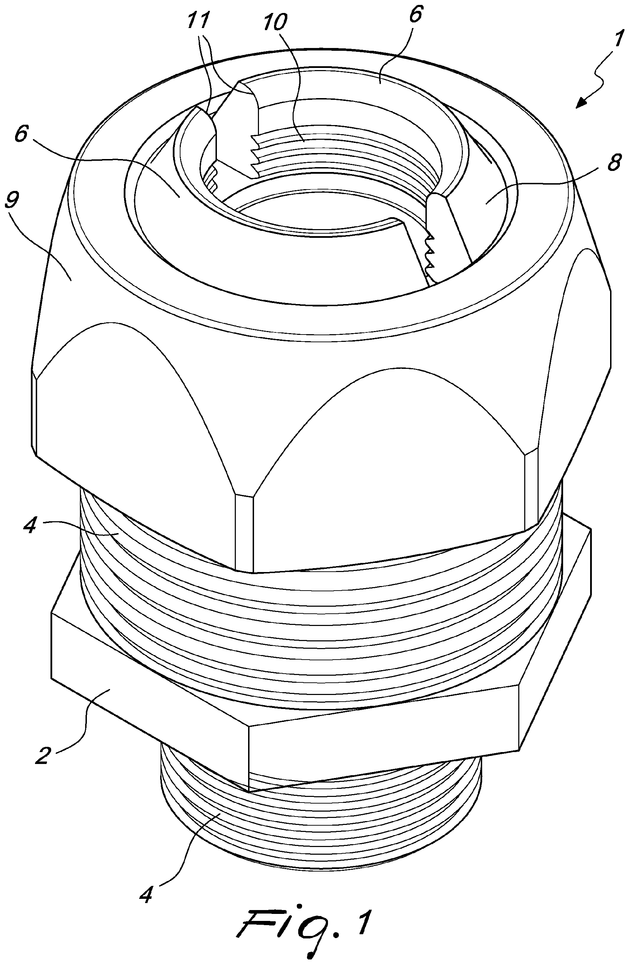

Figure 1 is a perspective view of the pull-resistant cable gland according to the present invention;

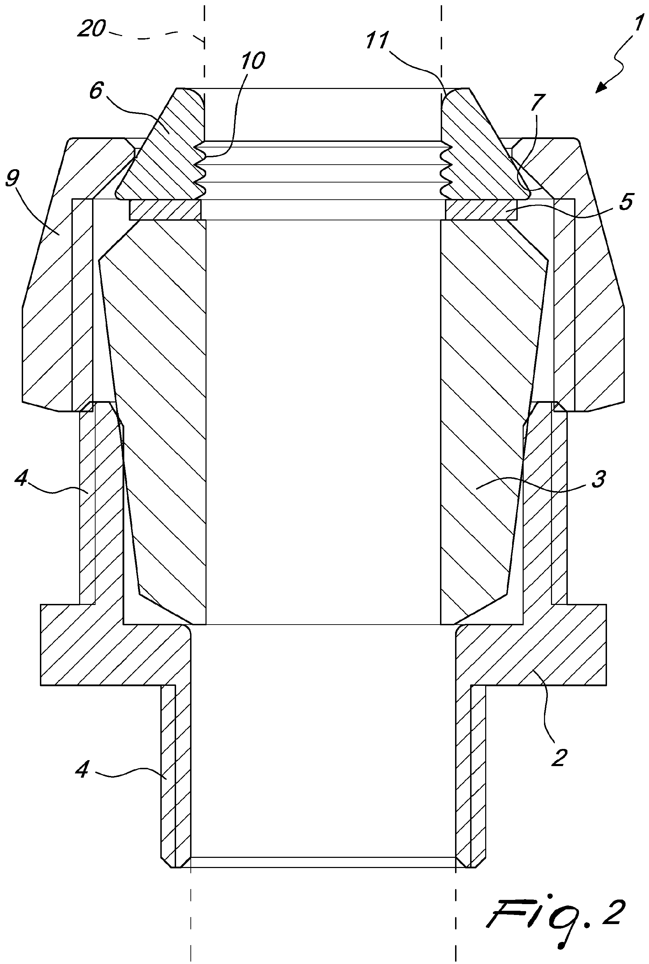

Figure 2 is a cross-sectional view taken along the line II-II of the pull-resistant cable gland according to the invention;

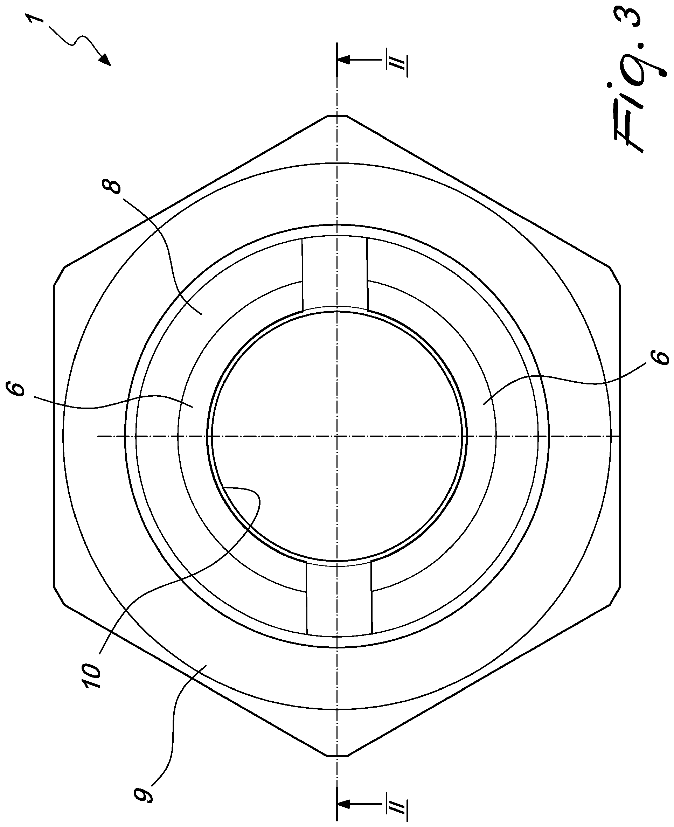

Figure 3 is a plan view of the pull-resistant cable gland according to the present invention.

With reference to the figures, the pull-resistant cable gland according to the present invention, generally designated by the reference numeral 1, comprises a cable gland body 2, which is conveniently hollow and adapted to accommodate a cable 20 to be clamped.

The body 2 of the cable gland conveniently accommodates a hollow conical sealing element 3, made of rubber (for example EPDM), inside which the cable 20 to be clamped is adapted to pass.

The rubber sealing element 3 has, at its larger end face, a thrust washer 5 and a conical locking element 6 made of two halves, which is locked in place by a nut 9, which is screwed onto a threading 4 of the body 2 of the cable gland.

Conveniently, the nut 9 has an inner region 7 which is inclined with respect to the axis of the nut 9 and which is adapted to come to rest against the inclined external surface 8 of the semi-conical locking element 6.

Screwing the nut 9 onto the body 2 of the cable gland ensures that the conical locking element 6, owing to the thrust exerted by the sliding of the inclined region 7 of the nut 9 against the inclined region 8 of the conical locking element 6, comes to exert a thrust longitudinally with respect to the axis of the cable gland body 2, which at the same time transversely generates a double thrust, one opposing the other, which is adapted to clamp the two portions of the conical locking element 6 on the cable 20. This will ensure the mechanical hold against traction (the clamping) of the cable 20.

Conveniently, the conical element 6 is made of two halves which are arranged around the cable to be clamped and are tightened, therefore, by the screwing of the locking nut 9.

Conveniently, the conical locking element 6 is provided internally with a U-shaped or C-shaped profile 10 which makes it possible to retain the cable 20 without any damage to the cable itself.

The conical locking element 6 conveniently has the same diameter as the hole of the rubber sealing element 3.

Moreover, the conical locking element 6 is provided, at its entry region for the cable 20, opposite the region in abutment against the washer 5, with a rounded profile 11 that allows the insertion of the cable 20 and which has the function of preventing damage to the cable if it is subjected to oscillating movements depending on the type of application for which it is used, thus preventing wear and tear thereof.

The ability to use a locking element 6 constituted by two halves that can be coupled makes it possible to adapt it to the minimum diameter and to the maximum diameter determined for the cable 20 by the sealing element 3, therefore making the cable gland according to the invention versatile.

Assembly of the cable gland takes place as follows.

The utility of the thrust washer 5 on the rubber sealing element 3 is, during the operation to tighten the nut 9, to prevent the rubber sealing element 3 from working its way in between the two portions of the locking element 6 and preventing them from being correctly closed on the cable 20.

It also has the function of pushing and uniformly deforming the rubber sealing element 3 on the cable 20.

Assembly of the pull-resistant cable gland according to the invention takes place as follows.

First the user inserts the cable 20 into the nut 9 and, after having prepared the cable gland body 2 with the sealing element 3 and the thrust washer 5 inside it, the cable is inserted into the cable gland body 2 through the passage hole of the thrust washer 5 and of the rubber sealing element 3. At this point the nut 9 is tightened against the conical element 6 so as to be screwed onto the cable gland body 2, in so doing therefore clamping the cable 20 inside the cable gland according to the invention.

In practice it has been found that the pull-resistant cable gland according to the invention fully achieves the set aim and objects, in that it makes it possible to clamp a cable in the body of the cable gland with a slippage of the cable that is comfortably within the limits allowed by the regulations.

This makes it possible for the pull-resistant cable gland according to the invention to be anti-slippage, i.e., it prevents the cable that is held or clamped inside it from undergoing a slippage that is greater than the maximum tolerance allowable by the regulations.

The pull-resistant cable gland, thus conceived, is susceptible of numerous modifications and variations, all of which are within the scope of the appended claims.

Thus, for example, the conical element 6 could be made in a single piece, and in this case there would be no adaptability to cables of different diameters.

Moreover, all the details may be substituted by other, technically equivalent elements.

In practice, the materials used, as well as the contingent shapes and dimensions, may be any according to the requirements and to the state of the art.

The disclosures in Italian Patent Application No. 102020000032558 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A pull-resistant cable gland (1), particularly for armored and non-armored cables, which comprises a cable gland body (2) provided with an external thread, said cable gland body being adapted to allow the passage of a cable (20) to be clamped, a conical sealing element (3) being accommodated within said cable gland body (2), a conical locking element (6) being arranged at the larger end face of said conical sealing element (3), and a locking nut (9) being configured to be screwed onto said cable gland body (2), in so doing abutting against said conical locking element (6), for the clamping of said conical locking element (6) against said sealing element (3).

2. The cable gland according to claim 1, **characterized in that** said conical locking element (6) is provided in two halves which can be mutually coupled around the cable (20) to be clamped.

3. The cable gland according to claim 1 or 2, **characterized in that** said conical locking element has an internal profile (10) which is U-shaped or C-shaped in order to retain the cable without damaging it.

4. The cable gland according to one or more of the preceding claims, **characterized in that** said locking nut (9) has a conical internal upper surface (7) which is adapted to mate with the conical external surface (8) of said conical locking element (6).

5. The cable gland according to one or more of the preceding claims, **characterized in that** said conical locking element (6) is provided, at its end for the entry of said cable (20), with a rounded edge (11).

6. The cable gland according to one or more of the preceding claims, **characterized in that** said cable gland is adapted to accommodate cables of different sizes.

7. The cable gland according to one or more of the preceding claims, **characterized in that** said sealing element (3) is made of rubber.

8. The cable gland according to one or more of the preceding claims, **characterized in that** said conical locking element (6) is provided in a single piece.

9. The cable gland according to one or more of the preceding claims, **characterized in that** said conical locking element (6) abuts against a washer (5).
